(19) Europäisches Patentamt
European Patent Office
Office européen des brevets

(11) **EP 3 846 335 A1**

(12) **EUROPEAN PATENT APPLICATION**

(43) Date of publication:
**07.07.2021 Bulletin 2021/27**

(51) Int Cl.:
*H02P 5/46* [(2006.01)]    *H02P 5/485* [(2016.01)]
*H02K 16/02* [(2006.01)]

(21) Application number: **19383219.3**

(22) Date of filing: **31.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Fundación Tecnalia Research &
Innovation**
**20009 San Sebastián, Guipúzcoa (ES)**

(72) Inventors:
• **McIntyre, Joseph**
  **Donostia - Guipúzcoa (ES)**

• **Johansson, Rolf**
  **22100 Lund (SE)**
• **Hubert, Julius Klein**
  **20009 Donostia (Guipúzcoa) (ES)**
• **Robertsson, Anders**
  **22100 Lund (SE)**

(74) Representative: **Balder IP Law, S.L.**
**Paseo de la Castellana 93**
**5ạ planta**
**28046 Madrid (ES)**

(54) **MOTOR ASSEMBLY FOR STICTIONLESS OPERATION**

(57)    Motor assembly for stictionless operation, which comprises a first electric motor (Motor #1) and a second electric motor (Motor #2), the first motor (Motor #1) comprising a body (B1) and a shaft (S1) rotatable with respect to the body (B1) such that the first motor (Motor #1) can rotate with a first velocity $\omega_1$, the second motor (Motor #2) comprising a body (B2) and a shaft (S2) rotatable with respect to the body (B2) such that the second motor (Motor #2) can rotate with a second velocity $\omega_2$, the motors (Motor #1, Motor #2) being mounted such that an output axis is defined, the assembly comprising control means configured for operating in a first mode where both motors rotate with a same bias velocity $\omega_{bias}$ and opposite senses such that $\omega_{out} = \omega_0$, and the control means comprising at least a control loop ($\omega_2$, $C_2$, $G_2$) for controlling the torque ($C_2$) of the second motor (Motor #2) which is fed with a signal which is proportional to the difference between the second velocity $\omega_2$ and the difference between a commanded velocity $\omega_{cmd}$ and the bias velocity $\omega_{bias}$, such that the motor can rotate with an output velocity $\omega_{out} \neq 0$, while both $\omega_1 \neq 0$ and $\omega_2 \neq 0$.

**Description**

**TECHNICAL FIELD**

The present invention relates to servo motor devices that can have advantageous applications in robotics, prosthetics and/or teleoperation, where the precision and avoidance of phenomena like hysteresis are essential. Torque motors are subject to the forces of static friction, particularly when the motor acts through high-ratio reduction gearing. This nonlinearity creates problems for estimation of the output torque of the motor, particularly at zero velocity, making the control of systems based on these motors much more difficult and less precise. The invention described here creates a new class of torque motor that avoids the problem of static friction by allowing the internal rotors and gears of the motor to turn continuously, even when the net rotation at the output is zero.

**STATE OF THE ART**

The output torque of a motor plus its reduction gearing is perturbed by the presence of static friction, which creates a dead zone in the relationship between the commanded torque and the actual torque output. The static friction manifests itself as hysteresis in the relationship between the commanded and actual output torque. This non-linear behavior around zero velocity complicates the control of a dynamical system. It can also render the motor to be non-backdriveable when the levels of static friction are high with respect to the torques that can be generated by the load, making the motors less useful in certain classes of robot behavior. This hysteresis is undesirable because it reduces one's ability to estimate or predict the actual output torque based on the commanded torque when the motor is not turning.

Static friction comes into play only when the shaft of the motor is at rest with respect to its housing and bearings.

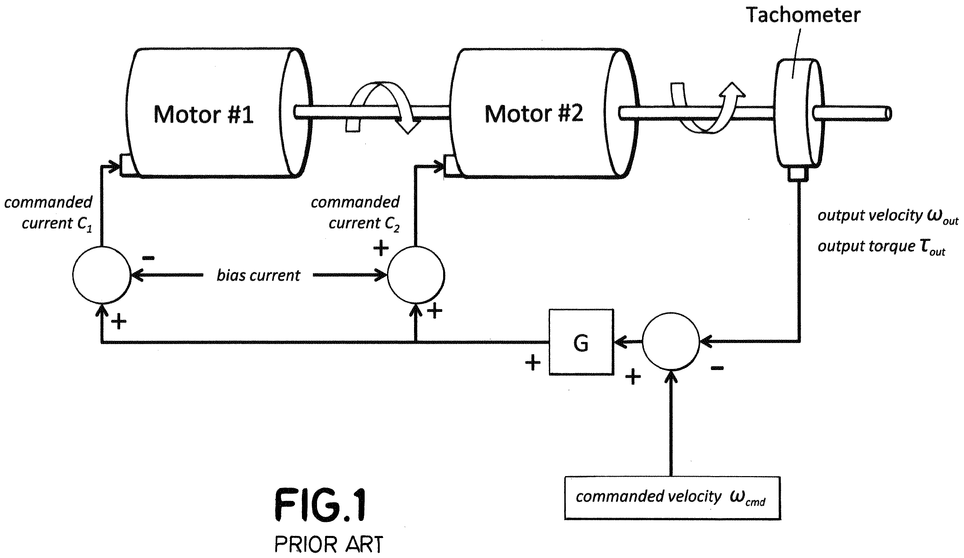

For overcoming this known drawback, it is known to provide a motor, as shown in FIG. 1, which comprises a first electric motor and a second electric motor, the first motor comprising a body and a shaft rotatable with respect to the body such that the first motor can rotate with a first velocity $\omega_1$, the second motor comprising a body and a shaft rotatable with respect to the body such that the second motor can rotate with a second velocity $\omega_2$, the motors being mounted such that their shafts are coaxial and the body of the second motor is solidary with the shaft of the first motor such that an output velocity $\omega_{out}$ is defined where:

$$\omega_{out} = \omega_1 + \omega_2 \qquad (I)$$

and wherein the motor assembly comprising control means configured for operating in a first mode where both motors rotate with a same bias velocity $\omega_{bias}$ and

opposite senses such that $\omega_{out} = \omega_0$.

Since the bearings and the moving parts of both motors rotate in counter directions, the frictional forces acting on the moving parts work in opposite directions and thus, when the system is in motion, the magnitude of the frictional forces, in spite of being present, are essentially constant, which allows for a better accuracy and control of the assembly.

US Patent US005311091A discloses such a system, but is silent with respect to the velocity feedback control of the individual motors that is inherent to the designs in the current application and that is essential to avoid the runaway condition when attempting to use the combined system as a torque-generating device (e.g. in robotics applications).

**DESCRIPTION OF THE INVENTION**

For overcoming the mentioned drawbacks the present invention proposes a motor assembly for stictionless operation, which comprises a first electric motor and a second electric motor, the first motor comprising a body and a shaft rotatable with respect to the body such that the first motor can rotate with a first velocity $\omega_1$, the second motor comprising a body and a shaft rotatable with respect to the body such that the second motor can rotate with a second velocity $\omega_2$, the motors being mounted such that their shafts are coaxial and the body of the second motor is solidary with the shaft of the first motor such that an output velocity $\omega_{out}$ is defined where:

$$\omega_{out} = \omega_1 + \omega_2 \qquad (I)$$

the motor assembly comprising control means configured for operating in a first mode where both motors rotate with a same bias velocity $\omega_{bias}$ and opposite senses such that $\omega_{out} = \omega_0$, and wherein the control means comprise at least a first control loop for controlling the torque of the second motor, the control loop being fed with a signal which is proportional to the difference between:

- the second velocity $\omega_2$ and;
- the difference between a commanded velocity $\omega_{cmd}$ and the bias velocity $\omega_{bias}$.

such that the motor can rotate with an output velocity $\omega_{out} \neq 0$, while both $\omega_1 \neq 0$ and $\omega_2 \neq 0$.

Static friction comes into play only when the shaft of the motor is at rest with respect to its housing and bearings. In the invention described here, static friction is avoided with the invention that is physically the equivalent of two motors attached in series. When the two motors turn at equal speed in opposite directions, the net rotation of the output of the second motor is at zero velocity with respect to ground, but the shafts and reduction gears of each motor are nevertheless always spinning, and thus free from the forces of static friction.

By controlling the relative velocity of the two opposing motors, one can achieve any desired net velocity, including zero velocity, while the internal rotors are continuously rotating.

In some embodiments, the control means comprise a second control loop for controlling the torque of the first motor, the control loop being fed with a signal which is proportional to the difference between:

- the first velocity $\omega_1$ and;

the difference between a commanded velocity $\omega_{cmd}$ and the bias velocity $\omega_{bias}$.

Therefore, a further advantage of this embodiment with respect to prior art cited above, is that each motor can be embodied with a feedback controller that regulates the current of each motor proportionally to the difference between a commanded velocity and the actual measured velocity. Control of the velocity and torque of the output shaft is achieved through the appropriate regulation of the set points of each of the component feedback controllers. The inclusion of individual velocity controllers on each of the two motors:

1. avoids runaway conditions in which the individual torque motors spin faster and faster with respect to each other in response to a commanded increase in torque or velocity of the output shaft, due to inevitable imbalance between the torques provided by each of the individual motors,

2. allows for accurate estimation of output torque based on the difference between the commanded and measured rotational velocities of the individual motors, without need for torque sensing on the output shaft,

3. effectively creates an actuator that is commanded in terms of a "wave variable" (linear combination of rotational velocity and torque) which is advantageous in the implementation of servo control systems with significant transmission delays (e.g. for remote teleoperation of robotic devices).

Herein also it is disclosed a motor assembly for stictionless operation, which comprises a first electric motor and a second electric motor, the first motor comprising a body and a shaft rotatable with respect to the body such that the first motor can rotate with a first velocity $\omega_1$, the second motor comprising a body and a shaft rotatable with respect to the body such that the second motor can rotate with a second velocity $\omega_2$, the motors being mounted such that their shafts are coaxial, characterized in that it comprises a differential gear box provided with two sun gears and a ring gear, wherein the sun gears are solidary with the shafts of the electric motors and such that the ring gear defines the output axis of the assembly, and wherein the motor assembly comprises control means configured for operating in a first mode where both motors rotate with a same bias velocity $\omega_{bias}$ and opposite senses such that $\omega_{out} = \omega_0$.

This embodiment is advantageous in that it offers an alternative that allows taking advantage of the space in another way. If a device that occupies the space in a more linear manner has been described above, the motors can be arranged in a more compact manner, each mounted with its fixed body, and by means of a differential, which is a low-cost component, achieve a stictionless assembly.

In some embodiments of the assembly based in a differential box, the control means comprise at least a first control loop for controlling the torque of the second motor, the control loop being fed with a signal which is proportional to the difference between:

- the second velocity $\omega_2$ and;
- the difference between a commanded velocity $\omega_{cmd}$ and the bias velocity $\omega_{bias}$.

such that the motor can rotate with an output velocity $\omega_{out} \neq 0$, while both $\omega_1 \neq 0$ and $\omega_2 \neq 0$.

In some embodiments of the assembly based in a differential box, the control means comprise a second control loop for controlling the torque of the first motor, the control loop being fed with a signal which is proportional to the difference between:

- the first velocity $\omega_1$ and;

the difference between a commanded velocity $\omega_{cmd}$ and the bias velocity $\omega_{bias}$.

Finally, the invention also relates to a robotic arm or servomotor device comprising a motor assembly according to any of the preceding claims.

## BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:

Figure 1 shows a device that operates according to known principles.

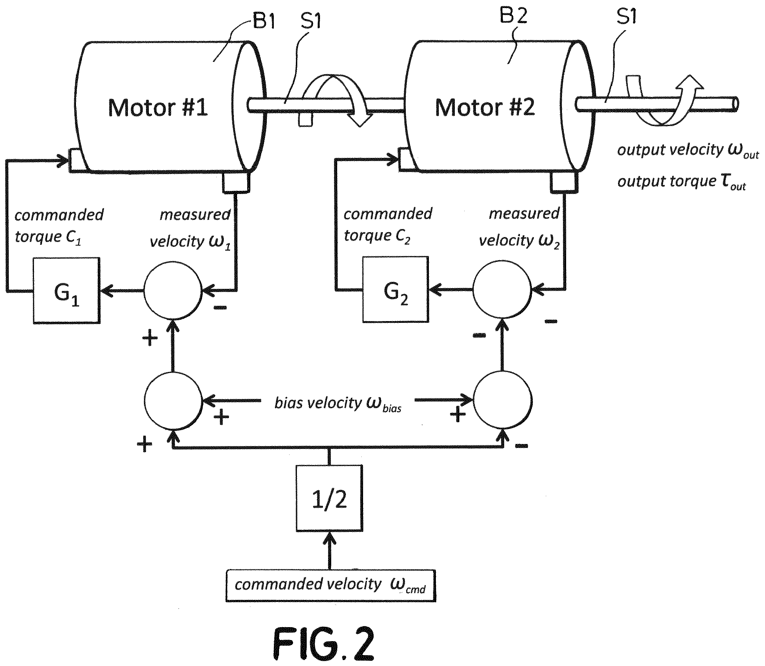

Figure 2 shows a first embodiment of the invention in which only one of the motors is controlled, but which allows the output speed to be regulated.

Figure 3 shows an improved version with respect to Figure 2, but in which each of the motors comprises a control loop.

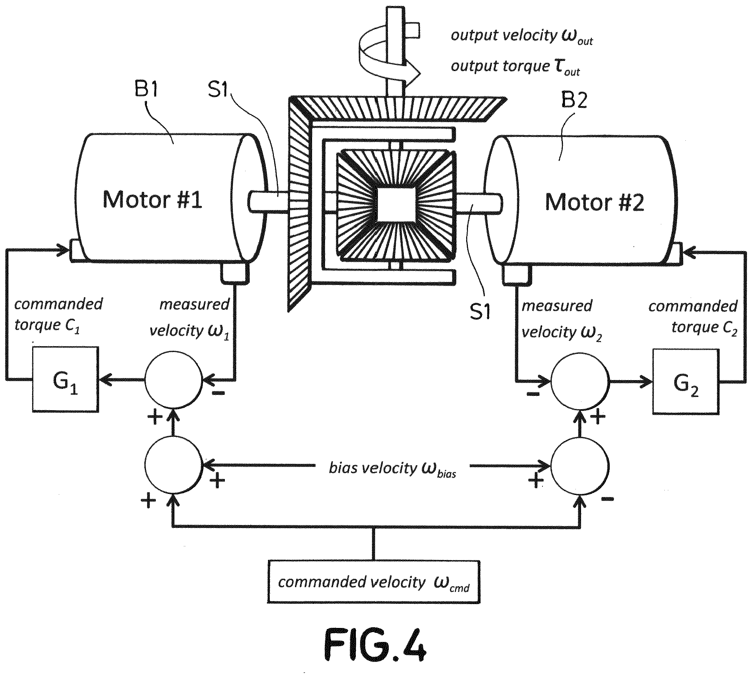

Figure 4 shows an embodiment of the invention in which the mechanical cooperation of the motors is carried out by means of a differential instead of mechanically assembling the motors in series.

## DESCRIPTION PREFERRED EMBODIMENTS FOR CARRYING OUT THE INVENTION

The concept of the dynamic, stictionless motor can be achieved through three different mechanical embodiments:
In the first embodiment, shown in Fig. 1, two identical torque motors are mounted in series, a first electric motor Motor #1 and a second electric motor Motor #2.

The first motor Motor #1 comprises a body B1 and a shaft S1 rotatable with respect to the body B1 such that the first motor Motor #1 can rotate with a first velocity $\omega_1$. The second motor Motor #2 comprises a body B2 and a shaft S2 rotatable with respect to the body B2 such that the second motor Motor #2 can rotate with a second velocity $\omega_2$. T

The motors Motor #1, Motor #2 are mounted such that their shafts are coaxial S1, S2 and the body B2 of the second motor Motor #2 is solidary with the shaft S1 of the first motor Motor #1 such that an output velocity $\omega_{out}$ is defined where:

$$\omega_{out} = \omega_1 + \omega_2 \qquad (I)$$

The motor assembly comprises control means configured for operating in a first mode where both motors rotate with a same bias velocity $\omega_{bias}$ and opposite senses such that $\omega_{out} = \omega_0$, and comprise:
A first control loop $\omega_2$, $C_2$, $G_2$ for controlling the torque $C_2$ of the second motor Motor #2, the control loop being fed with a signal which is proportional to the difference between:

- the second velocity $\omega_2$ and;
- the difference between a commanded velocity $\omega_{cmd}$ and the bias velocity $\omega_{bias}$,

and a second control loop $\omega_1$, $C_1$, $G_1$ for controlling the torque $C_1$ of the first motor Motor #1, the control loop being fed with a signal which is proportional to the difference between:

- the first velocity $\omega_1$ and;

the difference between a commanded velocity $\omega_{cmd}$ and the bias velocity $\omega_{bias}$.
Thus, the motor can rotate with an output velocity $\omega_{out} \neq 0$, while both $\omega_1 \neq 0$ and $\omega_2 \neq 0$;
In other words, when both motors are turning at the same speed, but in opposite directions, the net velocity of the shaft of the second motor with respect to ground is zero. Each motor is controlled by a velocity servo, such that the current to the motors (commanded torque) is proportional to the difference between the measured and desired velocity. The reference velocity to each of the servos is set to a common bias or common mode velocity, with motor #2 spinning in the opposite direction as motor #1, resulting in a net velocity of zero in the output shaft. To generate a net motion at velocity v, the reference velocity for motor #1 is increased by v/2 and the reference velocity for motor #2 is decreased by v/2. If rotation of the output shaft is impeded, the rotational velocity of the two motors will decrease with respect to the reference velocity sent to each one, resulting in a net production of torque due to the action of the proportional velocity servo.
The basic relations of the control parameters are the following:

$$\omega_1 = \omega_{bias} + \tfrac{1}{2}\omega_{cmd}$$

$$\omega_2 = -(\omega_{bias} - \tfrac{1}{2}\omega_{cmd})$$
$$= \tfrac{1}{2}\omega_{cmd} - \omega_{bias}$$

$$\omega_{out} = \omega_1 + \omega_2$$
$$= \omega_{cmd}$$

$$C_1 = G_1(\tfrac{1}{2}\omega_{cmd} + \omega_{bias} - \omega_1)$$

$$C_2 = G_2(\tfrac{1}{2}\omega_{cmd} - \omega_{bias} - \omega_2)$$

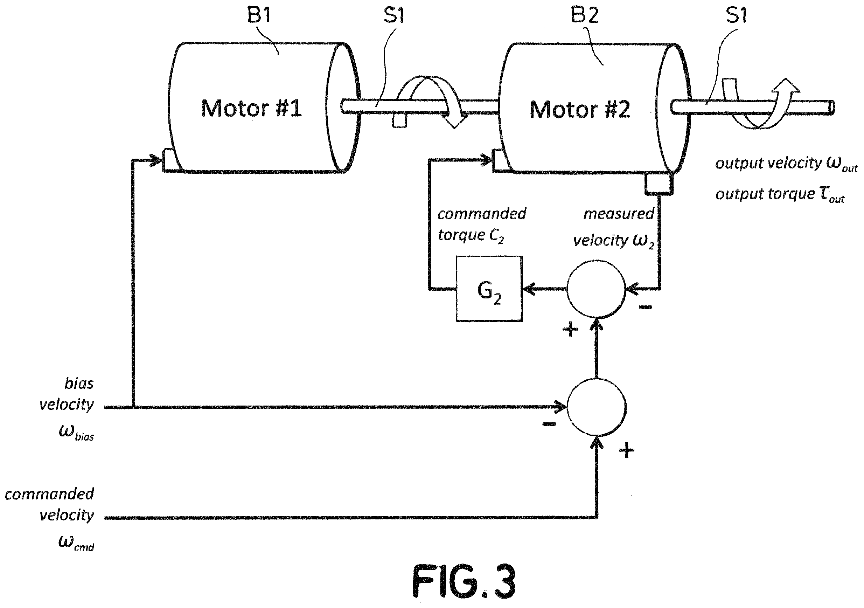

In the second embodiment, shown in Figure 3, two motors are mounted in series, as in embodiment #1, with motor #2 attached to the shaft of motor #1. In this case, motor #1 is a highly stiff, non-backdrivable motor (e.g. a stepper motor) set to turn at a constant rotation velocity (the bias velocity). Motor #2 is a torque motor controlled by a proportional velocity controller, as in embodiment #1, and is nominally set to rotate at equal speed but in the opposite direction as the bias rotation in motor #1, resulting in a zero rotational velocity of the output shaft with respect to ground. Non-zero net rotation of the output shaft with respect to ground is achieved by incrementing or decrementing the reference velocity of the servo controlling motor #2. If motion of the output shaft is impeded, motor #2 will generate torque that is proportional to the difference between the commanded and actual rotational velocity of motor #2, provided that motor #1 is strong enough to maintain a constant bias velocity.

$$\omega_1 = \omega_{bias}$$

$$\omega_2 = -\left(\omega_{bias} - \omega_{cmd}\right)$$
$$= \omega_{cmd} - \omega_{bias}$$

$$\omega_{out} = \omega_1 + \omega_2$$
$$= \omega_{cmd}$$

$$C_2 = G_2\left(\omega_{cmd} - \omega_{bias} - \omega_2\right)$$

In the third embodiment, the two motors are connected to the shafts of a differential transmission. This embodiment forms a separate invention that allows to implement a stictionless device starting form two motors. Rotation of the output shaft will be zero when the two motors rotate at equal velocity but in opposite directions. As in embodiment #1, net rotation of the output axis is achieved by incrementing the commanded velocity of one motor and decreasing the commanded velocity of the other, or vice versa. In addition to the torque-control capabilities allowed by the velocity control of each individual motor, as described above, both motors are immobile with respect to a foundational structure. In this case, the equations are similar to the first embodiment.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

**Claims**

1. Motor assembly for stictionless operation, which comprises a first electric motor (Motor #1) and a second electric motor (Motor #2), the first motor (Motor #1) comprising a body (B1) and a shaft (S1) rotatable with respect to the body (B1) such that the first motor (Motor #1) can rotate with a first velocity $\omega_1$, the second motor (Motor #2) comprising a body (B2) and a shaft (S2) rotatable with respect to the body (B2) such that the second motor (Motor #2) can rotate with a second velocity $\omega_2$, the motors (Motor #1, Motor #2) being mounted such that their shafts are coaxial (S1, S2) and the body (B2) of the second motor (Motor #2) is solidary with the shaft (S1) of the first motor (Motor #1) such that an output velocity $\omega_{out}$ is defined where:

$$\omega_{out} = \omega_1 + \omega_2 \qquad (I)$$

the motor assembly comprising control means configured for operating in a first mode where both motors rotate with a same bias velocity $\omega_{bias}$ and opposite senses such that $\omega_{out} = \omega_0$, **characterized in that** the control means comprise at least a first control loop ($\omega_2$, $C_2$, $G_2$) for controlling the torque ($C_2$) of the second motor (Motor #2), the control loop being fed with a signal which is proportional to the difference between:

- the second velocity $\omega_2$ and;
- the difference between a commanded velocity $\omega_{cmd}$ and the bias velocity $\omega_{bias}$.

such that the motor can rotate with an output velocity $\omega_{out} \neq 0$, while both $\omega_1 \neq 0$ and $\omega_2 \neq 0$.

2. Motor assembly according to claim 1, wherein the control means comprise a second control loop ($\omega_1$, $C_1$, $G_1$) for controlling the torque ($C_1$) of the first motor (Motor #1), the control loop being fed with a signal which is proportional to the difference between:

- the first velocity $\omega_1$ and;

the difference between a commanded velocity $\omega_{cmd}$ and the bias velocity $\omega_{bias}$.

3. Motor assembly for stictionless operation, which comprises a first electric motor (Motor #1) and a second electric motor (Motor #2), the first motor (Motor #1) comprising a body (B1) and a shaft (S1) rotatable with respect to the body (B1) such that the first motor (Motor #1) can rotate with a first velocity $\omega_1$, the second motor (Motor #2) comprising a body (B2) and a shaft (S2) rotatable with respect to the body (B2) such that the second motor (Motor #2) can rotate with a second velocity $\omega_2$, the motors (Motor #1, Motor #2) being mounted such that their shafts are coaxial (S1, S2), **characterized in that** it comprises a differential gear box (GB) provided with two sun gears (SB1, SB2) and a ring gear (RBout), wherein the sun gears (SB1, SB2) are solidary with the shafts (S1, S2) of the electric motors (Motor #1, Motor #2) and such that the ring gear (RBout) defines the output axis of the assembly, and wherein the motor assembly comprises control means configured for operating in a first mode where both motors rotate with a same bias velocity $\omega_{bias}$ and opposite senses such that $\omega_{out} = \omega_0$.

4. Motor assembly according to claim 3, wherein the control means comprise at least a first control loop ($\omega_2$, $C_2$, $G_2$) for controlling the torque ($C_2$) of the second motor (Motor #2), the control loop being fed with a signal which is proportional to the difference between:

    - the second velocity $\omega_2$ and;
    - the difference between a commanded velocity $\omega_{cmd}$ and the bias velocity $\omega_{bias}$.

such that the motor can rotate with an output velocity $\omega_{out} \neq 0$, while both $\omega_1 \neq 0$ and $\omega_2 \neq 0$.

5. Motor assembly according to claim 4, wherein the control means comprise a second control loop ($\omega_1$, $C_1$, $G_1$) for controlling the torque ($C_1$) of the first motor (Motor #1), the control loop being fed with a signal which is proportional to the difference between:

    - the first velocity $\omega_1$ and;

the difference between a commanded velocity $\omega_{cmd}$ and the bias velocity $\omega_{bias}$.

6. Robotic arm or servomotor device comprising a motor assembly according to any of the preceding claims.

**FIG.1**
PRIOR ART

EP 3 846 335 A1

FIG.2

EP 3 846 335 A1

FIG.3

EP 3 846 335 A1

FIG.4

Europäisches
Patentamt

European
Patent Office

Office européen
des brevets

# EUROPEAN SEARCH REPORT

Application Number

EP 19 38 3219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 263444 A (KEIO GIJUKU; JAPAN SOC PROMOTION MACH IND) 26 September 2001 (2001-09-26) * paragraph [0001] * * paragraph [0008] - paragraph [0012]; figure 4 * * paragraph [0023] - paragraph [0026]; figure 5 * ----- | 3-6 | INV. H02P5/46 H02P5/485 H02K16/02 |
| X | JP S58 65367 A (MITSUBISHI ELECTRIC CORP) 19 April 1983 (1983-04-19) * paragraph [0001]; figures 1-2 * ----- | 1-6 | |
| A | US 4 373 147 A (CARLSON JR WILLIAM L) 8 February 1983 (1983-02-08) * column 2, line 44 - line 60; figure 1 * ----- | 1-6 | |

| | TECHNICAL FIELDS SEARCHED (IPC) |
|---|---|
| | H02P H02K |

The present search report has been drawn up for all claims

| Place of search | Date of completion of the search | Examiner |
|---|---|---|
| Munich | 27 April 2020 | Landi, Matteo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 38 3219

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2020

| Patent document cited in search report | | Publication date | Patent family member(s) | | Publication date |
|---|---|---|---|---|---|
| JP 2001263444 | A | 26-09-2001 | NONE | | |
| JP S5865367 | A | 19-04-1983 | NONE | | |
| US 4373147 | A | 08-02-1983 | AU | 548372 B2 | 05-12-1985 |
| | | | BR | 8204283 A | 19-07-1983 |
| | | | CA | 1160861 A | 24-01-1984 |
| | | | DE | 3278412 D1 | 01-06-1988 |
| | | | EP | 0071387 A2 | 09-02-1983 |
| | | | JP | H0119533 B2 | 12-04-1989 |
| | | | JP | S5826554 A | 17-02-1983 |
| | | | MX | 7153 E | 13-11-1987 |
| | | | US | 4373147 A | 08-02-1983 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 005311091 A